# EUROPÄISCHE PATENTSCHRIFT

(11) **EP 0 713 819 B1**
(45) Veröffentlichungstag und Bekanntmachung des Hinweises auf die Patenterteilung: **15.04.1998**
(21) Anmeldenummer: 95111880.1
(22) Anmeldetag: 28.07.1995
(51) Int. Cl.: B62B 3/14, B62B 5/06, G09F 23/06

(54) **Schiebegriffanordnung für einen Transportwagen**
Handle for transport trolley
Manche pour chariot transporteur

(30) Priorität: 26.11.1994 DE 9419042 U
(43) Veröffentlichungstag der Anmeldung: 29.05.1996
(73) Patentinhaber: Wanzl GmbH & Co. Entwicklungs-KG, D-89336 Leipheim (DE)
(72) Erfinder: Wanzl, Rudolf, D-89340 Leipheim (DE)

(56) Entgegenhaltungen:
- EP-A- 0 212 557
- DE-A- 4 207 581
- DE-U- 8 502 781
- US-A- 5 301 443

## Beschreibung

Die Erfindung betrifft eine Schiebegriffanordnung für einen Transportwagen, insbesondere für einen Einkaufswagen, mit einem stab- oder rohrförmigen Griffkörper, der ein transparentes oberes Teil trägt, wobei die Enden der Schiebegriffanordnung zum Einfügen in am Transportwagen befindliche Griffaufnahmen bestimmt sind.

Durch die EP 0 212 557 A1 und durch das DE-Gm 93 17 500.0 sind Schiebegriffanordnungen bekannt, bei welchen zwischen dem Griffkörper und dem oberen transparenten Teil ein streifenförmiger Informationsträger eingefügt ist, der dem Wagenbenützer bestimmte Informationen vermitteln soll. Die gewählte Anordnung des Informationsträgers erweist sich dann als nachteilig, wenn mit solchen Schiebegriffanordnungen ausgestattete Transportwagen ungeschützt im Freien stehen, denn trotz aller Maßnahmen, die Informationsträger vor Feuchte zu schützen, gelangt immer wieder Nässe zwischen das obere Teil und dem darunterliegenden Informationsträger der Wagen. Diese Nässe ist imstande, die Informationsträger in negativer Weise zu beeinträchtigen. So können die auf den Informationsträgern aufgedruckten Informationen mit der Zeit schmutzig und teilweise unleserlich werden. Ferner bildet das eingedrungene Wasser Formen, die an Newton'sche Ringe erinnern und dadurch ebenfalls zur schlechten Leserlichkeit der aufgedruckten Informationen beitragen.

Es ist Aufgabe der Erfindung, eine Schiebegriffanordnung der gattungsgemäßen Art so weiterzuentwickeln, daß die eben geschilderten Nachteile vermieden werden.

Es wird vorgeschlagen, das obere Teil zum Tragen von text- und/oder bildhaften Informationen vorzusehen, die sich unmittelbar an der Unterseite des oberen Teiles befinden.

Hierzu eignet sich transparenter Kunststoff, der bevorzugt streifenförmig ausgebildet ist und ausreichend dick gestaltet das obere Teil bildet. An dessen Unterseite sind dabei text- und/oder bildhafte Informationen bevorzugt aufgedruckt oder aufgeklebt. Im Gegensatz zum eingangs genannten Stand der Technik ist nunmehr der Informationsträger gleichzeitig das obere Teil. Es kann also keine Feuchtigkeit oder Nässe mehr zwischen das obere Teil und den zu vermittelnden Informationen gelangen, da kein Zwischenraum mehr vorhanden ist. Anstelle von bisher zwei Teilen tritt nur noch ein Teil. Diese Teileinsparung trägt auch zur Kostenreduzierung bei, die bei Massenartikeln wie z.B. Einkaufswagen von enormer Bedeutung ist. Schließlich ist eine Beschädigung der Informationen , etwa durch Zerkratzen, nicht möglich, da diese sich von außen unzugänglich, an der Unterseite des oberen Teiles befinden.

Die Erfindung wird anhand von zwei Ausführungsbeispielen näher erläutert. Es zeigt
- Fig. 1: eine Schiebegriffanordnung, die an einem als Einkaufswagen gestalteten Transportwagen angeordnet ist;
- Fig. 2: eine rohrförmige Schiebegriffanordnung;
- Fig. 3: eine stabförmige Schiebegriffanordnung sowie
- Fig. 4: ein oberes Teil von unten betrachtet.

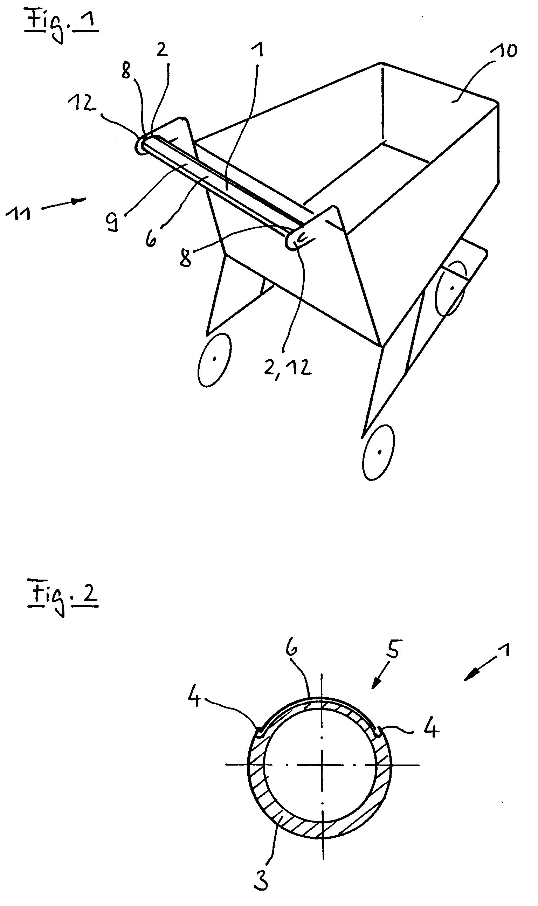

Die in Fig. 1 dargestellte Schiebegriffanordnung 1 befindet sich an einem als Einkaufswagen gestalteten Transportwagen 10. Der Einkaufswagen steht stellvertretend für alle möglichen Transportwagen 10, die mit der neuen Schiebegriffanordnung 1 ausstattbar sind. Die Schiebegriffanordnung 1 befindet sich am rückwärtigen oberen Ende 11 des Transportwagens 10, erstreckt sich horizontal angeordnet quer zur Schieberichtung und wird an beiden Enden 2 von je einer am Transportwagen 10 angeordneten Griffaufnahme 12 umfaßt und gehalten. Die Enden 2 der Schiebegriffanordnung 1 dringen dabei in je eine Griffaufnahme 12 ein. Derartige Anordnungen sind bekannt. Die Schiebegriffanordnung 1 ist als sog. 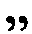 Werbegriff" gestaltet, d.h., sie trägt Informationen 9, die entweder an den Benutzer des Transportwagens 10 gerichtet sind oder beispielsweise den Eigentümer des Transportwagens ausweisen.

Fig. 2 zeigt eine rohrförmige Schiebegriffanordnung 1. Ihr Querschnitt ist zylindrisch oder im wesentlichen zylindrisch. Die Schiebegriffanordnung 1 wird durch den rohrförmigen Griffkörper 3 und durch ein in Längsnuten 4 des Griffkörpers 3 geführtes oberes Teil 6 gebildet, das aus transparentem Kunststoff gestaltet und abnehmbar oder auswechselbar im oberen Bereich 5 des Griffkörpers 3 angeordnet ist. Das obere Teil 6 erstreckt sich gewöhnlich in Längsrichtung des Griffkörpers 3. Es paßt sich bevorzugt der äußeren Querschnittskontur des Griffkörpers 3 an.

In Fig. 3 ist eine stabförmige Schiebegriffanordnung 1 dargestellt, deren Querschnitt an ein Oval erinnernd unrund gestaltet ist. Auch bei diesem Ausführungsbeispiel wird die Schiebegriffanordnung 1 durch einen Griffkörper 3 mit aufgesetztem oberen Teil 6 gebildet, das in Längsnuten 4 des Griffkörpers 3 geführt und abnehm- oder auswechselbar angeordnet ist. Das obere Teil 6 erstreckt sich üblicherweise in Längsrichtung des Griffkörpers 3. Es paßt sich ebenfalls der äußeren Querschmittskontur des Griffkörpers 3 an.

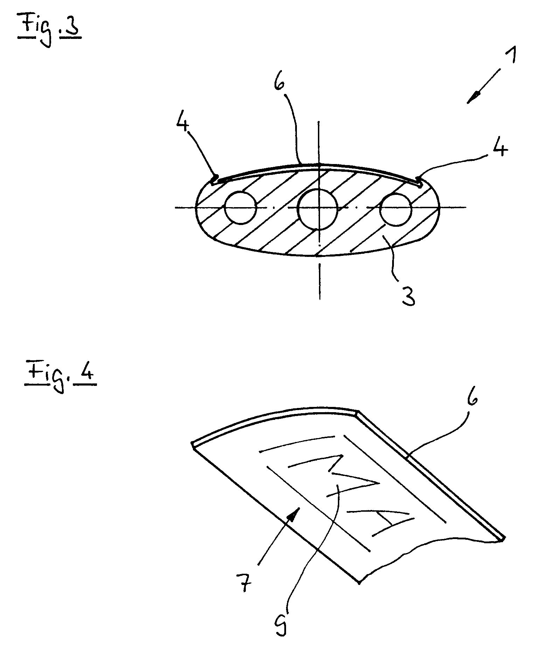

Fig. 4 zeigt ausschnittweise das obere Teil 6 von unten betrachtet. Die text-und/oder bildhaften Informationen 9 befinden sich an der Unterseite 7 des oberen Teiles 6. Sie sind bevorzugt unlösbar aufgedruckt. Sie können aber auch mittels einer Abziehfolie auf die Unterseite 7 des oberen Teiles 6 aufgeklebt sein. Durch die transparente Gestaltung des oberen Teiles 6 sind die Informationen 9 durch das obere Teil 6 hindurch sichtbar.

Man wird den Griffkörper 3 in der Regel als ein von einem Strangpreßprofil abgeschnittenes Teil gestalten, dessen Längsnuten 4 sich von einem Ende des Griffkörpers 3 zum anderen Ende erstrecken. Dies bedeutet, daß das obere Teil 6 gewöhnlich die gleiche Länge besitzt, wie der Griffkörper 3. In montiertem Zustand der Schiebegriffanordnung 1 werden somit auch die beiden Enden 8 des oberen Teiles 6 von den beiden Griffaufnahmen 12, vgl. Fig. 1, umfaßt. Es ist jedoch auch möglich, den Griffkörper 3 als eigenständiges Teil etwa mit einem Kunststoff- Spritzwerkzeug herzustellen. Dann ist es beispielsweise möglich, das obere Teil 6 kürzer als den Griffkörper 3 zu gestalten und das obere Teil 6 in eine am Griffkörper 3 befindliche, auf die Form des oberen Teiles 6 abgestimmte und mit Hinterschneidungen ausgestattete Vertiefung abnehmbar oder auswechselbar einzufügen. In diesem Falle kann auch das obere Teil 6 unterschiedlich gestaltet werden. Um eine rast- oder schnappschlüssige, jedoch lösbare Verbindung zwischen dem oberen Teil 6 und dem Griffkörper 3 zu erzielen, ist es durchaus möglich, am oberen Teil 6 Vorsprünge oder Hinterschneidungen anzuformen, die beim Aufsetzen des oberen Teiles auf den Griffkörper 3 in geeignete, am Griffkörper 3 befindliche Hinterschneidungen oder Vertiefungen einrasten. Auch beim zuletzt genannten Beispiel sind die text- und/oder bildhaften Informationen 9 an der Unterseite 7 des oberen Teiles 6 vorgesehen.

## Patentansprüche

1. Schiebegriffanordnung (1) für einen Transportwagen, insbesondere für einen Einkaufswagen, mit einem stab- oder rohrförmigen Griffkörper (3), der ein transparentes oberes Teil (6) trägt, wobei die Enden (2) der Schiebegriffanordnung (1) zum Einfügen in am Transportwagen befindliche Griffaufnahmen (12) bestimmt sind, dadurch **gekennzeichnet,** daß das obere Teil (6) zum Tragen von text- und/oder bildhaften Informationen (9) vorgesehen ist, die sich unmittelbar an der Unterseite (7) des oberen Teiles (6) befinden.

2. Schiebegriffanordnung nach Anspruch 1, dadurch **gekennzeichnet,** daß der Querschnitt der Schiebegriffanordnung (1) zylindrisch oder an ein Oval erinnernd unrund gestaltet ist.

3. Schiebegriffanordnung nach Anspruch 1 oder 2, dadurch **gekennzeichnet,** daß die Informationen (9) unlösbar am oberen Teil (6) angeordnet sind.

4. Schiebegriffanordnung nach Anspruch 1 oder 2, dadurch **gekennzeichnet,** daß die Informationen (9) mit Hilfe einer aufklebbaren Abziehfolie am oberen Teil (6) angeordnet sind.

5. Schiebegriffanordnung nach einen, der Ansprüche 1 bis 4, dadurch **gekennzeichnet,** daß das obere Teil (6) höchstens so lang ist wie der Griffkörper (3).

6. Schiebegriffanordnung nach einem der Ansprüche 1 bis 5, dadurch **gekennzeichnet,** daß das obere Teil (6) rast- oder schnappschlüssig mit dem Griffkörper (3) verbunden ist.

## Claims

1. A pushing arrangement (1) for a trolley, in particular for a shopping trolley, comprising a bar-type or tubular grip (3) carrying a transparent upper part (6), wherein the ends (2) of the pushing arrangement (1) are designed for insertion into recesses (12) in the trolley, characterised in that the upper part (6) is provided for carrying textual and/or pictorial information (9) applied directly to the underside (7) of the upper part (6).

2. A pushing arrangement according to claim 1, characterised in that the cross-section of the pushing arrangement (1) is cylindrical or non-circular in the manner of an oval.

3. A pushing arrangement according to claim 1 or 2, characterised in that the information (9) is non-detachably provided on the upper part (6).

4. A pushing arrangement according to claim 1 or 2, characterised in that the information (9) is provided on the upper part (6) by means of an adhesive transfer film.

5. A pushing arrangement according to any one of claims 1 to 4, characterised in that the upper part (6) is at most as long as the grip (3).

6. A pushing arrangement according to any one of claims 1 to 5, characterised in that the upper part (6) is connected to the grip (3) in a snap-locking manner.

## Revendications

1. Ensemble de poignée coulissante (1) pour un chariot de transport, notamment pour un chariot à provisions, avec un corps de poignée (3) en forme de barre ou de tube qui porte une partie supérieure transparente (6), les extrémités (2) de l'ensemble de poignée coulissante étant destinées à être insérées dans des logements de poignée (12) présents sur le chariot de transport, **caractérisé** en ce que la partie supérieure (6) est prévue pour porter des informations (9) sous forme de texte et/ou d'images, qui se trouvent directement sur la face inférieure (7) de la partie supérieure (6).

2. Ensemble de poignée coulissante selon la revendication 1, **caractérisé** en ce que la section de l'ensemble de poignée coulissante (1) est réalisée de forme cylindrique ou ovalisée.

3. Ensemble de poignée coulissante selon la revendication 1 ou 2, **caractérisé** en ce que les informations (9) sont disposées de façon inamovible sur la partie supérieure (6).

4. Ensemble de poignée coulissante selon la revendication 1 ou 2, **caractérisé** en ce que les informations (9) sont disposées sur la partie supérieure (6) à l'aide d'une feuille détachable adhésive.

5. Ensemble de poignée coulissante selon une des revendications 1 à 4, **caractérisé** en ce que la partie supérieure (6) est au plus de même longueur que le corps de poignée (3).

6. Ensemble de poignée coulissante selon une des revendications 1 à 5, **caractérisé** en ce que la partie supérieure (6) est assemblée par crantage ou enclenchement au corps de poignée (3).
